(19)

**Europäisches Patentamt**

**European Patent Office**

**Office européen des brevets**

(11)  **EP 1 470 940 A2**

(12)  **EUROPÄISCHE PATENTANMELDUNG**

(43) Veröffentlichungstag:
  **27.10.2004  Patentblatt 2004/44**

(51) Int Cl.⁷: **B60G 17/015**, B60T 8/00

(21) Anmeldenummer: **04002017.4**

(22) Anmeldetag: **30.01.2004**

(84) Benannte Vertragsstaaten:
  **AT BE BG CH CY CZ DE DK EE ES FI FR GB GR
  HU IE IT LI LU MC NL PT RO SE SI SK TR**
  Benannte Erstreckungsstaaten:
  **AL LT LV MK**

(30) Priorität: **22.04.2003  DE 10318005**

(71) Anmelder: **Continental Aktiengesellschaft
  30165 Hannover (DE)**

(72) Erfinder: **Stiller, Alexander
  30823 Garbsen (DE)**

(54)  **Verfahren zur Ermittlung eines Fahrparameters für ein Fahrzeug**

(57)  Die Erfindung betrifft ein Verfahren zur Ermittlung eines Fahrparameters für ein Fahrzeug mit folgenden Schritten:

- Messung einer Federbeinkraft mittels einem zwischen einem Fahrzeugaufbau und einem Federbein angeordneten Kraftsensor,

- Berechnung des Fahrparameters aus der Federbeinkraft.

Messung statischer Federbeinkräfte $F_{FSTAT}$ im Stillstand — 20

Speicherung der Werte für $F_{FSTAT}$ — 22

Messung dynamischer Federbeinkräfte $F_{Fdyn}$ bei der Fahrt — 24

Ermittlung Dämpfersollkraft $F_{DSoll}$ aus $F_{FSTAT} - F_{Fdyn}$ — 26

Fig. 2

EP 1 470 940 A2

**Beschreibung**

Die Erfindung betrifft ein Verfahren zur Ermittlung eines Fahrparameters für ein Fahrzeug sowie ein digitales Speichermedium, ein Kraftfahrzeug und ein Regelungssystem.

Aus dem Stand der Technik ist es bekannt, mittels Beschleunigungssensoren zum Beispiel eine Längs- und eine Querbeschleunigung eines Kraftfahrzeugs zu messen; diese Messungen bilden die Grundlage für eine fahrdynamische Regelung, wie zum Beispiel durch ABS oder ESP Systeme. Ein Nachteil von solchen Beschleunigungssensoren ist, dass diese nur mit relativ großem Aufwand und ungenau kalibriert werden können.

Ferner sind aus dem Stand der Technik Verfahren zur Regelung der Dämpfer bekannt, insbesondere das sogenannten Sky Hook Verfahren und das Ground Hook Verfahren. Zum Beispiel wird bei dem Sky Hook Verfahren die Dämpfkraft proportional der Aufbaugeschwindigkeit gewählt. Zur Ermittlung der Aufbaugeschwindigkeit wird hierzu der Abstand zwischen dem Aufbau und der Radachse gemessen und differenziert. Ein Nachteil ist hierbei, dass die Regelung erst dann eingreifen kann, wenn der Aufbau z.B. aufgrund der Unebenheiten der Fahrbahn bereits in Bewegung gebracht worden ist.

Der Erfindung liegt demgegenüber die Aufgabe zu Grunde, ein verbessertes Verfahren zur Ermittlung eines Fahrparameters und einer darauf basierenden fahrdynamischen Regelung zu schaffen. Ferner liegt der Erfindung die Aufgabe zu Grunde ein entsprechendes digitales Speichermedium, ein Regelungssystem und ein Kraftfahrzeug mit einer solchen verbesserten Ermittlung eines Fahrparameters zu schaffen.

Die der Erfindung zu Grunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Die vorliegende Erfindung schafft ein Verfahren zur Ermittlung eines Fahrparameters für ein Fahrzeug durch Messung einer, mehrerer oder aller Federbeinkräfte des Fahrzeugs.

Hierzu werden z.B. zwischen dem Fahrzeugaufbau und den Federbeinen Kraftsensoren angeordnet. Aus den gemessenen Federbeinkräften lassen sich dann verschiedene Fahrparameter berechnen, wie zum Beispiel die Aufbaumasse, die achsweise Masseverteilung, die radindividuellen Ersatzaufbaumassen, die statischen Federsteifigkeiten, die Aufbaubeschleunigung und die Radaufstandskräfte.

Ein Vorteil bei der Verwendung von Kraftsensoren gegenüber üblichen Beschleunigungssensoren ist insbesondere, dass diese leichter zu kalibrieren sind. Ein weiterer Vorteil von Kraftsensoren ist, dass die Signalerfassung unabhängig von den Wank- und / oder Nickbewegungen des Aufbaus oder von einer Steigung oder Gefälle der Fahrbahn ist. Bei Beschleunigungssensoren müssen diese Anteile bei Längs- und Querbeschleunigungen kompensiert werden, da sonst das Messsignal verfälscht wird.

Darüber hinaus ist eine wesentlich genauere Bestimmung der Radaufstandskräfte über die gemessenen Federbeinkräfte möglich, als dies im Stand der Technik der Fall ist. Insbesondere ist es nicht erforderlich, dass die aktuelle Massenverteilung oder die Verlagerung des Aufbaus zur Ermittlung der Radaufstandskräfte bekannt ist.

Von besonderem Vorteil ist das erfindungsgemäße Verfahren ferner zur Regelung der Dämpfer. Durch die Verwendung der Federbeinkräfte anstelle der Aufbaubewegung kann die Regelung wesentlich präziser durchgeführt werden, da nicht erst eine Bewegung des Aufbaus abgewartet werden muss, bis die Regelung eingreifen kann. Zum anderen werden alle bislang nicht berücksichtigten Dämpfereinflüsse, wie Alter-, Verschleiß-, Temperaturveränderung und Fertigungsschwankungen durch die Kraftmessung an den Federbeinen automatisch mit erfasst, so dass die Qualität der Dämpferregelung hiervon unbeeinflusst und konstant ist.

Nach einer bevorzugten Ausführungsform der Erfindung werden beim Stillstand des Fahrzeugs zunächst die statischen Federbeinkräfte gemessen und abgespeichert. Während der Fahrt werden dann ständig die dynamischen Federbeinkräfte gemessen. Aus den Differenzen der statischen Federbeinkräfte und der dynamischen Federbeinkräfte wird eine Dämpfersollkraft ermittelt. Die Dämpfer des Fahrzeugs werden so geregelt, dass die Fahrzeugdämpfer die jeweilige Dämpfersollkraft hervorbringen, wodurch ein optimaler Fahrkomfort gewährleistet ist.

Nach einer weiteren bevorzugten Ausführungsform der Erfindung erfolgt über die aus den Federbeinkräften gewonnenen dynamischen Radaufstandskräfte eine Straßenzustandserfassung. In Abhängigkeit von dem Straßenzustand wird eine Gewichtung zwischen unterschiedlichen fahrdynamischen Regelungsverfahren vorgenommen.

Beispielsweise wird bei einem optimalen Straßenzustand eine Regelung nach dem Sky Hook Verfahren durchgeführt; bei einem sehr schlechten Straßenzustand, der durch entsprechende Ausschläge der Radaufstandskraft angezeigt wird, wird hingegen ein sicherheitsorientiertes Regelungsverfahren, wie zum Beispiel ein Ground Hook Verfahren angewendet. Bei einem mittleren Straßenzustand gehen sowohl die Komponenten des Sky Hook als auch des Ground Hook Verfahrens in die Regelung ein, um entsprechend dem Straßenzustand Komfort und Sicherheitsgesichtspunkte bei der Dämpferregelung zu berücksichtigen.

Im weiteren werden bevorzugte Ausführungsformen der Erfindung mit Bezugnahme auf die Zeichnungen näher erläutert. Es zeigen:

Figur 1    eine Prinzipdarstellung der Messung der Federbeinkraft,

Figur 2    ein Flussdiagramm eines Verfahrens zur Regelung der Dämpferkraft basierend auf der Differenz zwischen statischen und dynamischen Federbeinkräften,

Figur 3    ein Blockdiagramm einer ersten Ausführungsform eines Regelungssystems für ein Kraftfahrzeug,

Figur 4    ein Blockdiagramm einer zweiten Ausführungsform eines Regelungssystems für ein Kraftfahrzeug.

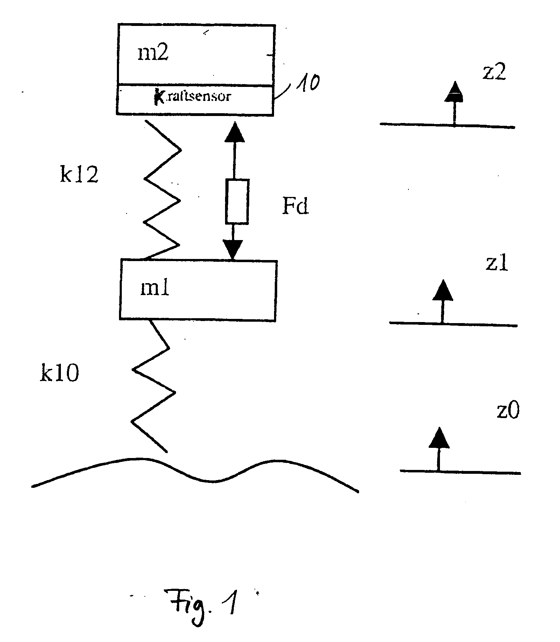

Die Figur 1 zeigt schematisch ein Fahrzeugrad mit einer Radmasse $m_1$ und einer Reifenfedersteifigkeit $k_{10}$. Auf dem Rad lastet bei Stillstand des Fahrzeugs die radindividuelle Ersatzaufbaumasse $m_2$. Diese wird durch eine Feder, zum Beispiel eine Stahlfeder oder eine Luftfeder, mit der Federsteifigkeit $k_{12}$ gefedert und mit einem Dämpfer, der eine Dämpfkraft $Fd$ aufdringt, gedämpft. Zwischen dem Aufbau und dem Federbein ist ein Kraftsensor 10 angeordnet. Der Kraftsensor 10 misst die auf die Karosserie wirkenden Federbeinkräfte $F_F$.

Das mechanische System der Figur 1 wird durch die folgenden Kraftgleichungen beschrieben:

$$m_1\, \ddot{z}_1 + k_{10}\left(z_1 - z_0\right) - k_{12}\left(z_2 - z_1\right) + F_d = 0$$

$$m_2\, \ddot{z}_2 + k_{12}\left(z_2 - z_1\right) - F_d = 0$$

mit

$$F_F = k_{12}\,(z_2 - z_1) - Fd$$

folgt

$$m_1\, \ddot{z}_1 + k_{10}\left(z_1 - z_0\right) - F_F = 0$$

$$\ddot{z}_2 = -F_F\,/\,m_2$$

Für ein stehendes, nicht belastetes und ruhendes Fahrzeug gilt $z_0 = z_1 = z_2 = 0$, wie auch für die entsprechenden Ableitungen.

Auf der Grundlage der Kraftmessung der Federbeinkräfte $F_F$ ist die Ermittlung verschiedener Fahrparameter möglich:

1. Berechnung der Fahrzeugmasse

Im Stillstand des Fahrzeugs werden die Federbeinkräfte $F_{FSTAT}$ an allen Federbeinen des Fahrzeugs gemessen. Aus der Summe der Federbeinkräfte $F_{FSTAT}$ folgt dann die Fahrzeugmasse.

2. Achsweise Masseverteilung

Aus den Federbeinkräften $F_{FSTAT}$ pro Fahrzeugachse folgt die achsweise Masseverteilung des Aufbaus.

3. Berechnung der radindividuellen Ersatzaufbaumassen $m_{2i}$

Aus der an einem Federbein eines Rades gemessenen statischen Federbeinkraft $F$ folgt die radindividuelle Ersatzaufbaumasse $m_{2i}$ des Rades $i$.

4. Berechnung der Federsteifigkeit $k_{12}$

Aus dem Abstand $z_2 - z_1$ zwischen der Karosserie und dem Rad wird die statische Federsteifigkeit $k_{12}$ aus der an dem betreffenden Rad wirkenden Federbeinkraft $F$ wie folgt berechnet:

$$\frac{F_{FSTAT}}{(z_2 - z_1)} = k_{12}$$

5. Berechnung der Aufbaubeschleunigung $\ddot{z}_i$

Die Aufbaubeschleunigungen für die jeweiligen Kraftangriffspunkte der Federbeinkräfte werden aus der Messung der dynamischen Federbeinkräfte $F_{Fdyn}$ während der Fahrt wie folgt ermittelt:

$$\ddot{z}_2 = -F_{Fdyn} / m_2$$

Aus der Aufbaubeschleunigung $z_2$ kann durch Integration die Aufbaugeschwindigkeit ermittelt werden. Ein Vorteil der Ermittlung der Aufbaugeschwindigkeit über die Kraftmessung liegt insbesondere darin, dass zum einen der Kraftsensor im Gegensatz zu einem Beschleunigungssensor mit geringerem Aufwand und genauer kalibrierbar ist und dass zum anderen das während der Fahrt ermittelte Aufbaubeschleunigungssignal bei Fahrzeuglängs- und Querbeschleunigung unabhängig von der Neigung der Fahrzeugkarosserie ist, so dass Wanken / Nicken und Berg-/Talfahrt die Meßgröße und die daraus abgeleiteten Größen, die zum Beispiel die Aufbaugeschwindigkeit nicht beeinflussen.
Die so ermittelte Aufbaugeschwindigkeit kann als Eingangsgröße für ein Sky Hook - und/oder Ground Hook Verfahren dienen.

6. Berechnung der dynamischen Radaufstandskraft

Über einen Abstandssensor wird der Abstand $z_2 - z_1$ zwischen der Karosserie und einem Rad ermittelt. Aus dem Abstandssignal wird die Radbeschleunigung $\ddot{z}_1$ des betreffenden Rades ermittelt.
Aus

$$F_R = k_{10}\left(z_1 - z_0\right) = F_{Fdyn} - m_1\, \ddot{z}_1$$

wird dann die dynamische Radaufstandskraft $F_R$ berechnet.
Die Radaufstandskraft $F_R$ ist für sämtliche Schlupfregelverfahren, wie zum Beispiel Anti-Blockierregelung, Traktionsschlupfregelung oder ESP Regelungen eine wichtige Eingangsgröße . Bislang konnte diese Eingangsgröße in Fahrzeugen nur sehr ungenau ermittelt werden. Die Erfindung ermöglicht demgegenüber eine genaue Ermittlung der Radaufstandskraft $F_R$ , wodurch diese Regelungsverfahren entsprechend verbessert werden können.

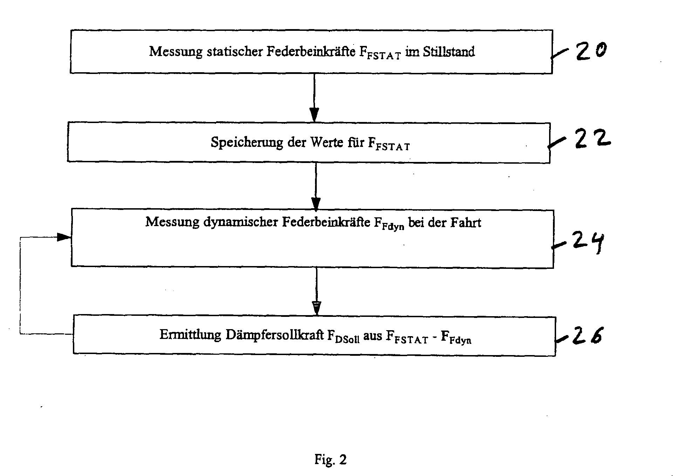

Die Figur 2 zeigt ein Flussdiagramm eines auf der Messung der Federbeinkräfte basierenden Regelungsverfahrens für die Dämpfung.
In dem Schritt 20 werden die statischen Federbeinkräfte $F_{FSTAT}$ im Stillstand des Fahrzeugs gemessen. In dem Schritt 22 werden die an den Federbeinen des Fahrzeugs gemessenen Federbeinkräfte $F_{FSTAT}$ für die weitere Verwendung in dem Regelungsverfahren gespeichert.
Nach Beginn der Fahrt werden die dynamischen Federbeinkräfte $F_{Fdyn}$ in dem Schritt 24 fortlaufend gemessen. In dem Schritt 26 werden aus den dynamischen Federbeinkräften $F_{Fdyn}$ und den statischen Federbeinkräften $F_{FSTAT}$ die Dämpfersollkräfte $F_{DSoll}$ ermittelt.
Wenn beispielsweise die statische Federbeinkraft am linken Vorderrad $F_{FSTATVL}$ ist und die dynamische Federbeinkraft am linken Vorderrad $F_{FdynVL}$ ist, so wird die Dämpfersollkraft $F_{DSollVL}$ für den vorderen linken Dämpfer aus der Differenz von $F_{SVL}$ - $F_{FdynVL}$ ermittelt. Beispielsweise wird die Dämpfersollkraft $F_{DSoll}$ mit der Differenz dieser dynamischen und statischen Federbeinkräfte gleich gesetzt. Alternativ wird die Dämpfersollkraft durch Eingabe des Differenzsignals in einen Proportional-, Proportional-Integral- oder Proportional-Integral-Differenzial-Regler ermittelt. Vorzugsweise erfolgt dies für sämtliche Dämpfer des Fahrzeugs.
Die Bestimmung der Dämpfersollkräfte aus den Differenzen zwischen den statischen und dynamischen Federbeinkräften erfolgt dabei so, dass die Dämpfersollkraft der Veränderung der Federbeinkräfte gegenüber dem statischen Fall entgegenwirkt.

Ein Vorteil dieses Verfahrens gegenüber dem herkömmlichen Sky Hook Verfahren liegt darin, dass die Dämpferkräfte schon verändert werden können, bevor der Fahrzeugaufbau in Bewegung gerät. Schon wenn eine Änderung der Federbeinkräfte sensiert wird, wird also die Dämpfkraft entsprechend verändert.

Des weiteren wird aufgrund des Kräftevergleichs am Federbein die wirklich erzeugte Dämpfkraft im Stellalgorithmus berücksichtigt, so dass Dämpfkraftschwankungen zum Beispiel aufgrund von Alterung, Fertigungstoleranzen und / oder Temperaturschwankungen keinen negativen Einfluss auf die Regelung haben.

Ferner ermöglicht es dieses Verfahren, dass bei einer Lastverlagerung im Fahrzeug automatisch die Dämpferkräfte entsprechend nachgestellt bzw. angepasst werden. Während einer Kurvenfahrt werden also automatisch die mehrbelasteten kurvenäußeren Räder stärker gedämpft und die kurveninneren Räder werden weniger stark gedämpft.

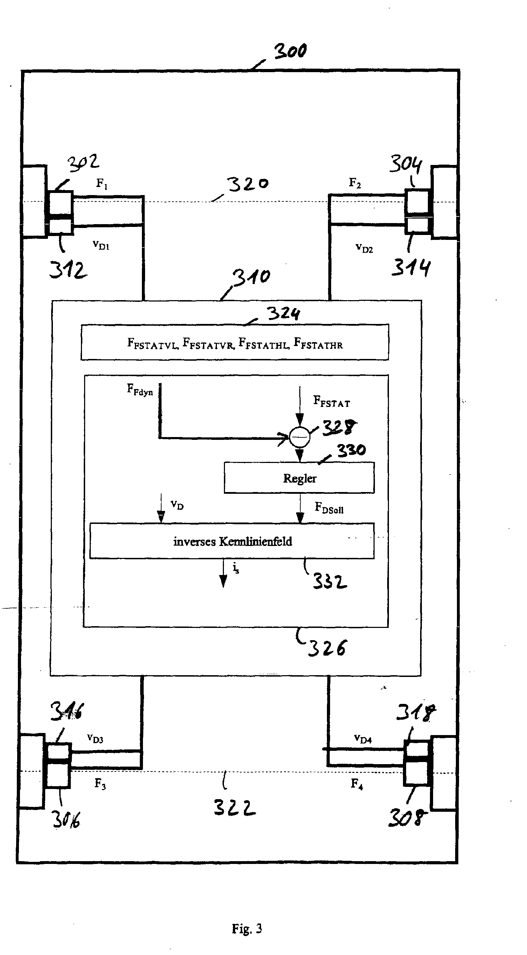

Die Figur 3 zeigt ein Kraftfahrzeug 300, in dem das Regelungsverfahren der Figur 2 implementiert ist. Das Kraftfahrzeug 300 hat an jedem seiner Federbeine Kraftsensoren 302, 304, 306 bzw. 308. Die Kraftsensoren 302 bis 308 messen jeweils die Federbeinkräfte, die an den jeweiligen Angriffspunkten der Federbeine auf die Karosserie des Kraftfahrzeugs 300 wirken; dies entspricht der Darstellung der Figur 1.

Der Kraftsensor 302 gibt ein Kraftsignal $F_1$ ab, welches in ein Regelungssystem 310 eingegeben wird. Ferner erhält das Regelungssystem 310 die Kraftsignale $F_2$, $F_3$, $F_4$ von den Kraftsensoren 304, 306 bzw. 308.

Ferner sind an den Rädern des Kraftfahrzeugs 300 Höhensensoren 312, 314, 316 und 318 angeordnet, die jeweils den Abstand zwischen dem Kraftangriffspunkt des Federbeins und der Vorderachse 320 bzw. der Hinterachse 322 angeben.

Die Höhensensoren 312 bis 318 geben entweder entsprechende Abstandssignale ab oder durch Differenzierung der gemessenen Abstände erhaltene Geschwindigkeitssignale. In dem Ausführungsbeispiel der Figur 3 gibt der Höhensensor 312 das Geschwindigkeitssignal $v_{D1}$ für die Dämpfergeschwindigkeit des vorderen linken Dämpfers ab. Dieses wird in das Regelungssystem 310 eingegeben. Entsprechend erhält das Regelungssystem 310 die Dämpfergeschwindigkeitssignale $v_{D2}$, $v_{D3}$ und $v_{D4}$ für die Dämpfergeschwindigkeiten des vorderen rechten Dämpfers, des hinteren linken Dämpfers bzw. des hinteren rechten Dämpfers des Kraftfahrzeugs 300.

Das Regelungssystem 310 hat einen Speicher 324. Der Speicher 324 dient zur Speicherung der statischen Federbeinkräfte, die im Stillstand des Kraftfahrzeugs 300 gemessen werden. In dem Speicher 324 sind also die Größen $F_{FSTATVL}$, $F_{FSTATVR}$, $F_{FSTATHL}$ und $F_{FSTATHR}$ für die statischen Federbeinkräfte vorne links, vorne rechts, hinten links und hinten rechts abgespeichert.

Das Regelungssystem 310 hat ferner eine Reglereinheit 326 zur Ermittlung einer Stellgröße zur Regelung der Dämpfkraft bzw. des Dämpfungskoeffizienten der Dämpfer. Die Reglereinheit 326 hat einen Subtrahierer 328 zur Subtraktion der statischen und dynamischen Federbeinkräfte. Das Ergebnis der Subtraktion wird in einen Regler 330 der Reglereinheit 326 eingegeben, wobei es sich beispielsweise um einen Proportional-, Proportional-Integral- oder Proportional-Integral-Differenzial-Regler handeln kann.

Der Regler 330 gibt die Dämpfersollkraft $F_{Dsoll}$ aus. Die Dämpfersollkraft $F_{Dsoll}$ und die entsprechende Dämpfergeschwindigkeit $v_D$ werden in ein inverses Kennlinienfeld 332 des betreffenden Dämpfers eingegeben, aus dem man den Dämpfersollstrom $i_s$ erhält. Dieser Dämpfersollstrom $i_s$ wird als Stellgröße für den betreffenden Dämpfer, das heißt zur Einstellung des zur Erzielung der Dämpfersollkraft erforderlichen Dämpfungskoeffizienten, verwendet.

Beispielsweise kann die Reglereinheit 326 im Multiplex-Betrieb für die verschiedenen Dämpfer des Kraftfahrzeugs 300 betrieben werden. In diesem Fall wertet die Reglereinheit 326 beispielsweise zuerst die Signale $F_1 = F_{Fdyn}$, die Dämpfergeschwindigkeit $v_{D1}$ und den gespeicherten Wert $F_{FSTATVL} = F_{FSTAT}$ zur Ermittlung der Stellgröße $i$ für den vorderen linken Dämpfer. Danach erfolgt der Reihe nach beispielsweise die Ermittlung der Stellgrößen für den vorderen rechten, den hinteren linken und den hinteren rechten Dämpfer. Alternativ sind für jeden Dämpfer separate Reglereinheiten 326 vorgesehen, so dass die Ermittlung der Stellgrößen zeitgleich erfolgen kann.

Vorzugsweise ist die Reglereinheit 326 als digitales Steuergerät ausgebildet.

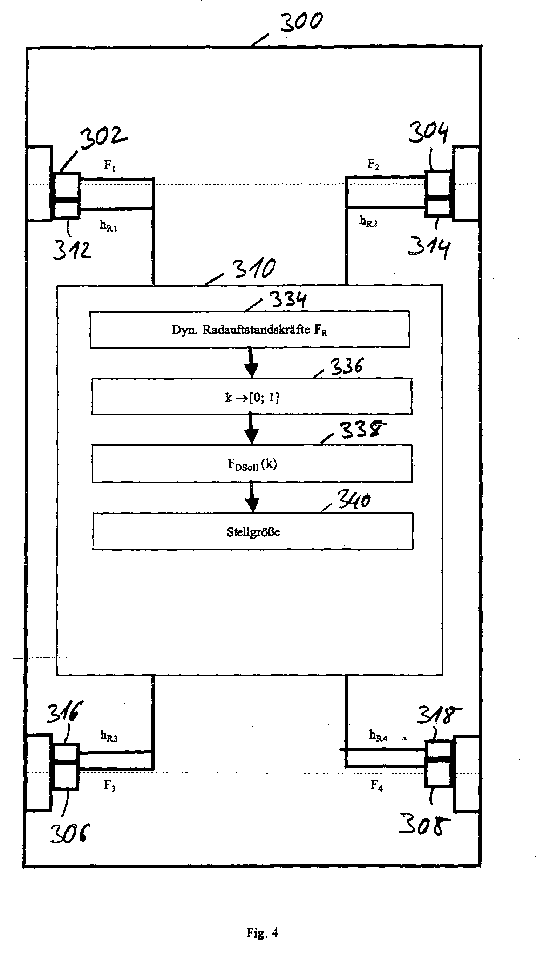

Die Figur 4 zeigt eine alternative Ausführungsform, wobei Elemente der Figur 4, die Elementen der Figur 3 entsprechen, mit den selben Bezugszeichen gekennzeichnet sind.

Das Regelungssystem 310 der Ausführungsform der Figur 4 hat ein Modul 334 zur Berechnung der dynamischen Radaufstandskräfte $F_R$ gemäß

$$F_R = k_{10}\left(z_1 - z_0\right) = F_{Fdyn} - m_1 \ddot{z}_1$$

Beispielsweise kann es ausreichend sein, exemplarisch nur die dynamischen Radaufstandskräfte für eines der Räder des Kraftfahrzeugs 300 zu bestimmen, zum Beispiel für das linke Vorderrad. In diesem Fall wird das Signal $F_1 = F_{Fdyn}$ und das Abstandssignal $h_{R1}$ des Höhensensors 312 für die Berechnung ausgewertet. Alternativ können aber auch die Radaufstandskräfte von mehreren oder allen der Räder gleichzeitig oder in zeitlicher Reihenfolge ermittelt werden.

Die zeitliche Änderung der dynamischen Radaufstandskräfte $F_R$ ist ein Maß für den Straßenzustand. Wenn sich die Radaufstandskräfte $F_R$ nicht oder nur wenig ändern, so bedeutet dies einen guten Straßenzustand. Dagegen führt ein schlechter Straßenzustand zu sprunghaften Änderungen der dynamischen Radaufstandskräfte $F_R$ .

Der zeitliche Verlauf der gemessenen dynamischen Radaufstandskräfte $F_R$ wird in dem Modul 336 ausgewertet. Das Modul 336 ordnet dem Faktor *k* dabei in Abhängigkeit von dem Straßenzustand einen Wert zwischen 0 und 1 zu, wobei ein Wert um 1 einer ebenen Straße und ein Faktor um 0 einer sehr unebenen Straße entspricht.

In dem Modul 338 werden die Dämpfersollkräfte $F_{DSoll}$ für die Dämpfer des Kraftfahrzeugs 300 wie folgt berechnet:

$$Fdsoll = k * f\,(Ffstat - Ffdyn) + (1 - k) * f(vd)$$

Bei der Funktion *f* kann es sich beispielsweise um einen konstanten Multiplikator handeln. Je nach dem Wert des Faktors *k* wird die Dämpfersollkraft also entweder mehr unter Komfortgesichtspunkten oder mehr unter Sicherheitsgesichtspunkten, das heißt zur Optimierung des Kontakts zwischen Reife und Straße gewählt. Auf diese Art und Weise werden Sky Hook und Ground Hook Anteile der Regelung je nach dem erfassten Straßenzustand miteinander kombiniert.

Die Ermittlung der Differenz zwischen $F_{FSTAT}$ und $F_{Fdyn}$ kann dabei entsprechend dem Ausführungsbeispiel der Figur 3 erfolgen; die Dämpfergeschwindigkeit $v_D$ kann aus dem entsprechenden Abstandssignal hergeleitet werden. Auf diese Art und Weise wird also in dem Modul 338 für jeden der Dämpfer eine Dämpfersollkraft berechnet, und zwar unter Berücksichtigung des erfassten Straßenzustands.

Hieraus werden in dem Modul 340 des Regelungssystems 310 die entsprechenden Stellgrößen für die Dämpfer des Fahrzeugs ermittelt.

**Bezugszeichenliste**

(Teil der Beschreibung)

| | |
|---|---|
| 10 | Kraftsensor |
| 300 | Kraftfahrzeug |
| 302 | Kraftsensor |
| 304 | Kraftsensor |
| 306 | Kraftsensor |
| 308 | Kraftsensor |
| 310 | Regelungssystem |
| 312 | Höhensensor |
| 314 | Höhensensor |
| 316 | Höhensensor |
| 318 | Höhensensor |
| 320 | Vorderachse |
| 322 | Hinterachse |
| 324 | Speicher |
| 326 | Reglereinheit |
| 328 | Subtrahierer |
| 330 | Regler |
| 332 | inverses Kennlinienfeld |
| 334 | Modul |
| 336 | Modul |
| 338 | Modul |
| 340 | Modul |

**Patentansprüche**

**1.** Verfahren zur Ermittlung eines Fahrparameters für ein Fahrzeug mit folgenden Schritten:

- Messung einer Federbeinkraft mittels einem zwischen einem Fahrzeugaufbau und einem Federbein angeordneten Kraftsensor,

- Berechnung des Fahrparameters aus der Federbeinkraft.

2. Verfahren nach Anspruch 1, wobei die statischen Federbeinkräfte bei Stillstand des Fahrzeugs gemessen und gespeichert werden.

3. Verfahren nach Anspruch 1 oder 2, wobei aus den statischen Federbeinkräften eine Aufbaumasse berechnet wird.

4. Verfahren nach Anspruch 1, 2 oder 3, wobei aus den statischen Federbeinkräften eine achsweise Aufbaumasseverteilung berechnet wird.

5. Verfahren nach einem der vorhergehenden Ansprüche 1 bis 4, wobei aus den statischen Federbeinkräften radindividuelle Ersatzaufbaumassen berechnet werden.

6. Verfahren nach einem der vorhergehenden Ansprüche 1 bis 5, wobei ein Abstand zwischen einer Fahrzeugachse und dem Aufbau gemessen wird und aus dem Abstand und einer statischen Federbeinkraft eine Federsteifigkeit des Federbeins berechnet wird.

7. Verfahren nach einem der vorhergehenden Ansprüche 1 bis 6, wobei ein Ausgangssignal des Kraftsensors in regelmäßigen zeitlichen Abständen von zwischen ca. 1 bis 20 Sekunden abgetastet wird, und das abgetastete Ausgangssignal mit einem Filter einer Zeitkonstante von zwischen ca. 1 bis 20 Sekunden zur Ermittlung einer Meßgröße gefiltert wird.

8. Verfahren nach einem der vorhergehenden Ansprüche 1 bis 7 mit folgenden weiteren Schritten:

- Messung einer dynamischen Federbeinkraft während der Fahrt,

- Ermittlung einer Dämpfersollkraft aus einer Differenz zwischen der statischen Federbeinkraft und der dynamischen Federbeinkraft.

9. Verfahren nach Anspruch 8, wobei die Dämpfersollkraft basierend auf der Differenz mittels eines Proportional-, eines Proportional-Integral- oder eines Proportionalintegral-Differenzial-Reglers ermittelt wird.

10. Verfahren nach Anspruch 8 oder 9, wobei eine Dämpfergeschwindigkeit gemessen wird und eine Stellgröße für den Dämpfer aus der Dämpfersollkraft und der Dämpfergeschwindigkeit ermittelt wird.

11. Verfahren nach Anspruch 10, wobei die Ermittlung der Stellgröße aus der Dämpfersollkraft und der Dämpfergeschwindigkeit mittels eines inversen Dämpferkennfeldes erfolgt.

12. Verfahren nach einem der vorhergehenden Ansprüche 1 bis 11, wobei eine Aufbaubeschleunigung aus einer dynamischen Federbeinkraft und einer Aufbauersatzmasse ermittelt wird.

13. Verfahren nach Anspruch 12, wobei die Aufbaubeschleunigung zu einer fahrdynamischen Regelung insbesondere nach einem Sky Hook und / oder Ground Hook Verfahren verwendet wird.

14. Verfahren nach einem der vorhergehenden Ansprüche 1 bis 13, wobei ein Abstand zwischen einer Radachse und dem Aufbau gemessen wird, um aus dem zeitlichen Verlauf des Abstands eine Radbeschleunigung zu ermitteln, wobei aus der Radbeschleunigung, einer Aufbauersatzmasse und einer dynamischen Federbeinkraft eine dynamischen Radaufstandskraft ermittelt wird.

15. Verfahren nach Anspruch 14, wobei die dynamische Radaufstandskraft als Eingangsgröße für einen Fahrdynamik-Regler dient.

16. Verfahren nach Anspruch 14 oder 15, wobei mittels der dynamischen Radaufstandskraft eine Straßenzustandserfassung erfolgt, und je nach dem Straßenzustand eine Gewichtung zwischen einem ersten Regelungsverfahren für die Dämpfung und einem zweiten Regelungsverfahren für die Dämpfung gewählt wird.

17. Verfahren nach Anspruch 16, wobei es sich bei dem ersten Regelungsverfahren um ein Sky Hook Verfahren und bei dem zweiten Regelungsverfahren um ein Ground Hook Verfahren handelt.

18. Digitales Speichermedium mit Programmmitteln zur Ermittlung eines Fahrparameters für ein Fahrzeug, wobei die Programmmittel zur Berechnung des Fahrparameters aus einer Federbeinkraft ausgebildet sind.

19. Digitales Speichermedium nach Anspruch 18, wobei es sich bei dem Fahrparameter um eine Aufbaumasse, eine achsweise Massenverteilung, eine radindividuelle Ersatzaufbaumasse, eine statische Federsteifigkeit, eine Aufbaubeschleunigung, Parameter einer Dämpfungsregelung, Fahrdynamikregelung, eines sonstigen Parameters eines Fahrwerkreglers und / oder um eine Radaufstandskraft handelt.

20. Digitales Speichermedium nach Anspruch 18 oder 19, wobei die Programmmittel zur Berechnung einer Dämpfersollkraft aus der Differenz einer statischen und einer dynamischen Federbeinkraft ausgebildet sind.

21. Digitales Speichermedium nach Anspruch 18, 19 oder 20, wobei die Programmmittel zur Berechnung einer Stellgröße für einen Dämpfer aus der Dämpfersollkraft und der Dämpfergeschwindigkeit ausgebildet sind.

22. Digitales Speichermedium nach einem der vorhergehenden Ansprüche 18 bis 21, wobei die Programmmittel zur Vornahme einer Gewichtung zwischen einem ersten Regelungsverfahren für die Dämpfung und einem zweiten Regelungsverfahren für die Dämpfung basierend auf einer dynamischen Radaufstandskraft ausgebildet sind.

23. Fahrzeug mit einem Aufbau und zumindest einem Federbein, wobei zwischen dem Aufbau und dem Federbein ein Kraftsensor (10; 302, 304, 306, 308) zur Messung der Federbeinkraft angeordnet ist, und mit Mitteln (310) zur Berechnung eines Fahrparameters aus der Federbeinkraft.

24. Regelungssystem für ein Fahrzeug mit

   - Mitteln (10; 302, 304, 306, 308) zur Messung einer Federbeinkraft zwischen einem Fahrzeugaufbau und einem Federbein,

   - Mitteln (310) zur Berechnung eines Fahrparameters des Fahrzeugs aus der Dämpferkraft zur Verwendung als Regelungsparameter.

25. Regelungssystem nach Anspruch 24, mit Mitteln (324, 326; 338) zur Ermittlung einer Dämpfersollkraft aus der Differenz zwischen einer statischen und einer dynamischen Federbeinkraft.

26. Regelungssystem nach Anspruch 24 oder 25 mit einem ersten Regelungsmodul für ein erstes Regelungsverfahren und mit einem zweiten Regelungsmodul für ein zweites Regelungsverfahren und mit Mitteln (336) zur Gewichtung zwischen dem ersten und dem zweiten Regelungsverfahren in Abhängigkeit von einer dynamischen Radaufstandskraft.

Fig. 1

Messung statischer Federbeinkräfte $F_{FSTAT}$ im Stillstand — 20

Speicherung der Werte für $F_{FSTAT}$ — 22

Messung dynamischer Federbeinkräfte $F_{Fdyn}$ bei der Fahrt — 24

Ermittlung Dämpfersollkraft $F_{DSoll}$ aus $F_{FSTAT}$ - $F_{Fdyn}$ — 26

Fig. 2

300

302
304
F₁
320
F₂
312 $v_{D1}$
314 $v_{D2}$

310

324

| $F_{FSTATVL}$, $F_{FSTATVR}$, $F_{FSTATHL}$, $F_{FSTATHR}$ |

$F_{Fdyn}$
$F_{FSTAT}$
328
330

| Regler |

$v_D$
$F_{DSoll}$

| inverses Kennlinienfeld |

$i$
332

326

316 $v_{D3}$
318 $v_{D4}$
F₃
322
F₄
306
308

Fig. 3

Fig. 4